# FASCICULE DE BREVET EUROPEEN

(11) **EP 2 625 424 B1**
(45) Date de publication et mention de la délivrance du brevet: **28.10.2015**
(21) Numéro de dépôt: 11773884.9
(22) Date de dépôt: 28.09.2011
(51) Int. Cl.: F04B 9/105, F04B 13/02, F04B 49/02, G01L 7/08

(54) **POMPE DOSEUSE DE LIQUIDE, ET DISPOSITIF DETECTEUR DE LA VARIATION DE PRESSION POUR UNE TELLE POMPE**
DOSIERPUMPE FÜR FLÜSSIGKEITEN, UND MESSVORRICHTUNG ZUR FESTSTELLUNG VON DRUCKSCHWANKUNGEN FÜR DIESE PUMPE
LIQUID DOSING PUMP, AND APPARATUS FOR DETECTING PRESSURE VARIATION FOR SAID PUMP

(30) Priorité: 08.10.2010 FR 1058175
(43) Date de publication de la demande: 14.08.2013
(73) Titulaire: DOSATRON INTERNATIONAL, 33370 Tresses (FR)
(72) Inventeur: LUCAS, Gregory, F-33370 Tresses (FR); VACHER, David, F-33370 Tresses (FR); CHARRIERE, Christophe, F-33370 Tresses (FR)
(74) Mandataire: Cabinet Armengaud Aîné
(86) Numéro de dépôt international: PCT/IB2011/054258
(87) Numéro de publication internationale: WO 2012/046162

(56) Documents cités:
- EP-A1- 0 885 357
- EP-A2- 0 915 256
- FR-A1- 2 707 350
- US-A- 4 809 731
- US-A- 5 055 008

## Description

L'invention est relative à une pompe doseuse de liquide, du genre de celles qui comportent un ajutage d'aspiration muni d'un clapet d'aspiration communiquant avec une chambre dé travail dans laquelle un piston peut être déplacé selon un mouvement alternatif, une aspiration étant produite, avec ouverture du clapet d'aspiration, lorsque le piston s'éloigne de l'ajutage, et un refoulement avec fermeture du clapet d'aspiration et sortie de liquide au travers d'un clapet de sortie, étant produit lorsque le piston se rapproche de l'ajutage.

Des pompes doseuses de ce genre sont connues, notamment d'après FR 2 847 950 au nom de la société déposante.

FR 2 707 350 divulgue une pompe doseuse comprenant un corps de pompe dans lequel un plongeur, formant piston, est monté coulissant. Le corps de pompe est muni d'un clapet anti-retour. Le plongeur est relié à un piston différentiel dont les déplacements alternatifs sont assurés par un dispositif de commande prévu pour que les frottements parasites soient réduits. Les variations de pression dans le corps de pompe ne sont pas prises en considération.

De telles pompes donnent satisfaction, mais il est souhaitable d'obtenir des informations améliorées sur leur fonctionnement, notamment pour permettre de diagnostiquer des problèmes, tels que la défaillance d'un élément de la pompe, et de rassembler des données précisant le comportement de la pompe, telles que calcul de dosage en temps réel, temps d'utilisation du doseur, consommation de produits chimiques, nombre de pannes.

EP 2 228 635 décrit un dispositif de mesure d'au moins une valeur physique, température ou pression, d'un fluide en écoulement continu dans une conduite, sans contact avec le fluide.

DE 39 24 740 décrit un dispositif détecteur de pression comportant des moyens sensibles à une pression fluidique dans un conduit, montés de manière à ne pas interférer avec un écoulement de fluide dans le conduit.

Les dispositifs détecteurs de ces documents permettent d'obtenir une information sur au moins une grandeur physique, pression et/ou température, ce qui dans le cas des pompes selon l'invention n'est pas suffisant, en particulier pour un calcul de dosage en temps réel.

Pour résoudre le problème précité, selon l'invention, une pompe doseuse de liquide, du genre défini précédemment, est caractérisée en ce qu'elle comporte, entre le clapet d'aspiration et la chambre de travail, un dispositif détecteur de la variation de pression comprenant d'une part un conduit raccordé à une extrémité à la chambre de travail et muni à son autre extrémité du clapet d'aspiration, et d'autre part un moyen sensible à la pression dans le conduit, monté dans la paroi du conduit,
et en ce que le moyen sensible à la pression dans le conduit est raccordé à des moyens d'exploitation des variations de pression comprenant des moyens de calcul électronique programmés pour déterminer différents paramètres de fonctionnement, tels que : calcul de dosage en temps réel, temps d'utilisation du doseur, consommation de produit chimique, nombre de pannes.

Le moyen sensible à la pression dans le conduit peut comprendre une membrane installée sur une portion de paroi du conduit et soumise à la pression provenant de la chambre de travail, et un moyen de détection des déplacements de la membrane par suite des variations de pression.

Avantageusement, la membrane est disposée dans une cavité, en retrait de la surface interne du conduit, la cavité communiquant par un orifice transversal avec le conduit.

Le moyen de détection des déplacements de la membrane peut être un moyen mécanique, en particulier constitué par un palpeur, d'un capteur optique, actionné par un doigt lié à la membrane.

En variante, le moyen de détection des déplacements de la membrane peut comprendre un capteur de déplacement de nature inductive, en particulier à effet Hall.

Le moyen sensible à la pression dans le conduit peut comprendre un transducteur, en particulier une jauge de contrainte montée sur la paroi du conduit, pour fournir des signaux électriques représentatifs des variations de pression dans la chambre de travail.

Les moyens d'exploitation sont en outre avantageusement prévus pour visualiser les cycles de la pompe doseuse, émettre une alerte en cas d'un arrêt du pompage, détecter une défaillance du système d'aspiration et, en option, détecter la fin d'un réservoir de liquide dans lequel l'aspiration a lieu.

De préférence, le dispositif détecteur de la variation de pression est raccordé de manière démontable à la chambre de travail.

L'invention est également relative à un dispositif détecteur de la variation de pression pour une pompe comportant une chambre de travail dans laquelle un piston peut être déplacé selon un mouvement alternatif, telle que défini précédemment, caractérisé en ce qu'il comprend d'une part un conduit propre à être raccordé de manière démontable à une extrémité de la chambre de travail de pompe, et muni à son autre extrémité d'un clapet d'aspiration, et d'autre part un moyen sensible à la pression dans le conduit, monté dans la paroi du conduit, et en ce que le moyen sensible à la pression dans le conduit est raccordé à des moyens d'exploitation des variations de pression comprenant des moyens de calcul électronique programmés pour déterminer différents paramètres de fonctionnement, tels que : calcul de dosage en temps réel, temps d'utilisation du doseur, consommation de produit chimique, nombre de pannes.

L'invention consiste, mises à part les dispositions exposées ci-dessus, en un certain nombre d'autres dispositions dont il sera plus explicitement question ci-après à propos d'exemples de réalisation décrits avec référence aux dessins annexés mais qui ne sont nullement limitatifs. Sur ces dessins :
Fig. 1 est une représentation partielle avec parties en extérieur d'une pompe doseuse conforme à l'invention, dont la partie inférieure est équipée d'un dispositif détecteur de pression et est représentée en coupe axiale verticale.
Fig. 2 est une représentation en perspective en coupe axiale, à plus grande échelle, d'une variante du dispositif détecteur avec son axe géométrique sensiblement horizontal et
Fig. 3 est une vue d'ensemble en élévation, à plus petite échelle, d'une pompe doseuse équipée d'un dispositif détecteur selon Fig.2, avec moyen d'exploitation formé par un calculateur électronique.

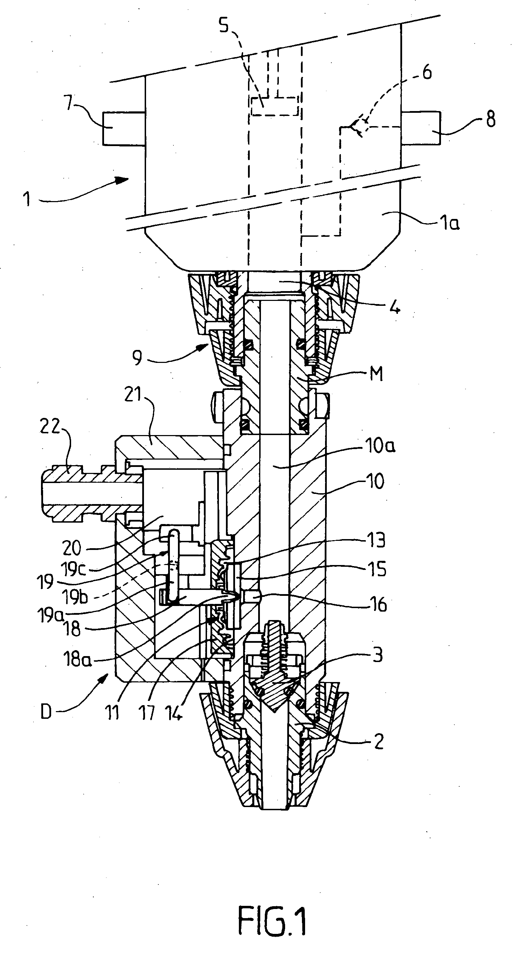

En se reportant aux dessins, notamment à Fig. 1, on peut voir une pompe 1 doseuse de liquide comportant un ajutage d'aspiration 2 avec clapet d'aspiration 3 communiquant avec une chambre de travail 4 dont seule la partie inférieure est visible sur Fig. 1. Un piston 5, sommairement représenté, peut être déplacé selon un mouvement de translation alternatif dans la chambre de travail ; une aspiration est produite avec ouverture du clapet 3 lorsque le piston 5 s'éloigne de l'ajutage 2, tandis qu'un refoulement, avec fermeture du clapet d'aspiration 3 et sortie de liquide au travers d'un clapet de sortie 6, est produit lorsque le piston 5 se rapproche de l'ajutage 2.

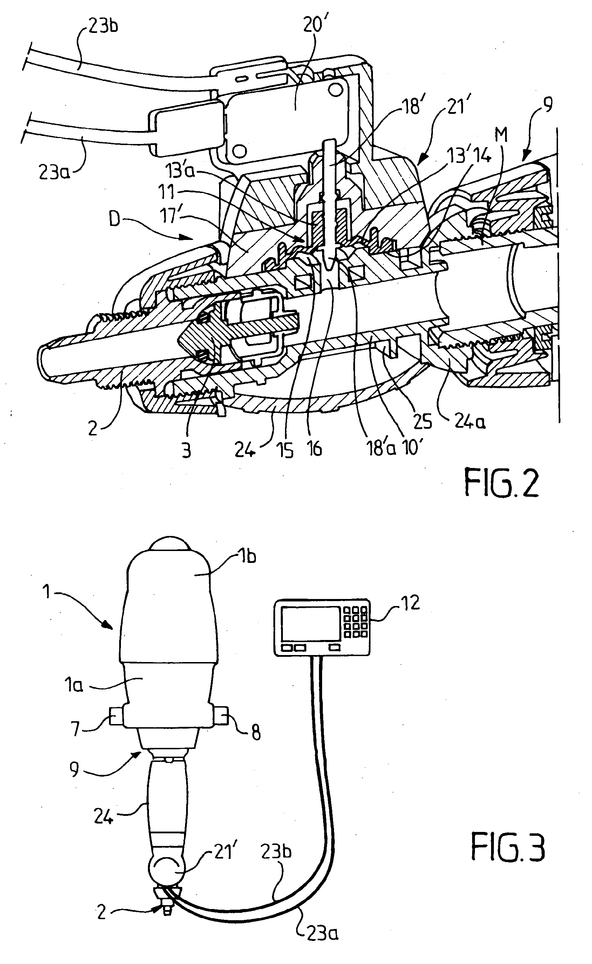

Le déplacement en translation alternative du piston 5 est avantageusement assuré par un moteur hydraulique (non représenté) inclus dans la pompe 1 et actionné par un liquide sous pression admis dans la pompe 1 par un orifice d'entrée 7 prévu sur le corps 1 a de la pompe. Le corps 1 a est généralement réalisé en matière plastique, avec un couvercle 1 b (Fig.3) fixé de manière démontable, notamment par vissage, sur ce corps.

Un additif liquide, contenu dans un récipient non représenté, peut être aspiré à l'aide d'un tuyau (non représenté) plongeant par une extrémité dans le récipient d'additif liquide et relié à son autre extrémité à l'ajutage d'aspiration 2. L'additif liquide est mélangé dans le corps de pompe 1 a au liquide principal entrant par l'orifice 7, et le mélange dosé sort par l'orifice de sortie 8, diamétralement opposé à l'orifice 7.

Selon l'état de la technique, l'ajutage d'aspiration 2 est prévu à l'extrémité inférieure de la chambre de travail 4, laquelle est équipée de moyens de raccordement 9, notamment par vissage, permettant d'installer de manière démontable l'ajutage à l'extrémité de la chambre 4.

Selon l'invention, la pompe doseuse 1 est équipée d'un dispositif D détecteur de la variation de pression dans la chambre de travail 4. Ce dispositif D est installé entre le clapet d'aspiration 3 et la chambre 4. Le dispositif D comporte, un conduit 10 raccordé à une extrémité à la chambre 4 par un manchon M et les moyens de raccordement 9. Le conduit 10 est muni à son autre extrémité du clapet d'aspiration 3 et de l'ajutage 2.

Le dispositif D comporte en outre un moyen 11 sensible à la pression dans le conduit 10, et donc à la pression de la chambre 4 raccordée à ce conduit. Des moyens 12 (Fig.3) d'exploitation des variations de pression détectées sont avantageusement prévus et reliés au moyen 11 sensible à la pression, pour analyser le fonctionnement de la pompe.

Selon le mode de réalisation représenté sur Fig. 1, le moyen 11 sensible à la pression comprend une membrane flexible 13 disposée de manière étanche contre la paroi de fond 14 d'une cavité prévue dans la paroi extérieure cylindrique du conduit 10. La membrane 13 constitue une cloison déformable d'une chambre 15 prévue dans la paroi du conduit 10. La chambre 15 communique par un orifice transversal 16 avec l'espace intérieur 10a du conduit 10 dans une zone comprise entre le clapet d'aspiration 3 et les moyens de raccordement 9 à la chambre 4. La pression régnant au niveau de l'orifice 16 est sensiblement la même que celle régnant dans la chambre 4.

La membrane 13 est réalisée en un matériau souple, notamment en matière élastomère, et est maintenue contre le fond 14 par un couvercle 17 dont le profil interne épouse le profil externe de la membrane qui présente un bourrelet périphérique. Selon la réalisation représentée, la membrane 13 comporte en outre, du côté opposé à l'espace intérieur 10a, une nervure circulaire située radialement à l'intérieur du bourrelet périphérique.

Le couvercle 17 comporte une ouverture centrale pour le passage et le guidage d'un doigt 18 d'axe géométrique orthogonal à l'axe géométrique du conduit 10. L'extrémité du doigt 18 tournée vers l'orifice 16 est réalisée sous forme d'un pointeau 18a recouvert par la membrane et propre à s'engager dans l'orifice 16 sous l'effet d'une dépression. Sur Fig. 1, la membrane 13 est représentée appliquée contre le couvercle 17, ce qui correspond au volume maximal de la chambre 15 et à une phase de pression dans la chambre 4 et dans le conduit 10.

Le doigt 18, à son extrémité opposée au pointeau 18a, est propre à agir sur un palpeur 19, notamment constitué par le levier rotatif 19a d'un capteur optique 20. La liaison entre le doigt 18 et le palpeur 19 est assurée par une articulation. Le montage rotatif du levier 19a est assuré à l'aide d'un axe 19b orthogonal au plan de Fig.1, situé sensiblement à mi-longueur du levier 19a et supporté par un palier prévu dans le capteur optique. L'extrémité 19c du levier éloignée du doigt 18 peut couper un faisceau optique du capteur 20, selon la position commandée par le doigt 18, et ainsi déclencher un signal électrique représentatif de la position de la membrane 13.

L'ensemble du couvercle 17, du doigt 18 et du capteur optique 20 est maintenu dans un boîtier 21 lui-même fixé contre le conduit 10. Le boîtier 21 comporte un embout 22 pour la sortie d'un ou plusieurs câbles (non représentés sur Fig. 1) reliés au contact 20.

En se reportant à Fig. 2, on peut voir, représentée sensiblement à l'horizontale, en coupe axiale, une variante de réalisation du dispositif détecteur D pour une pompe doseuse selon l'invention. Les éléments de Fig. 2 identiques à des éléments déjà décrits à propos de Fig. 1 sont désignés par les mêmes références numériques, éventuellement suivis d'une apostrophe ' lorsqu'une modification est apportée à cet élément. La description des éléments identiques n'est pas reprise.

La membrane 13' comporte, du côté opposé à chambre 15, une partie cylindrique 13'a en saillie suivant la direction radiale, qui entoure de manière étanche une portion du doigt 18'. Le pointeau 18'a forme l'extrémité de ce doigt tournée vers le conduit 10a et fait saillie dans la chambre 15. Le pointeau 18'a reste engagé en partie dans l'orifice 16 lorsque la membrane 13', comme illustré sur Fig. 2, est appliquée contre le couvercle 17'. Lors d'une phase d'aspiration, la membrane 13' s'écarte du couvercle 17' et vient se plaquer contre l'autre paroi de la chambre 15.

Le doigt 18', par son extrémité opposée au pointeau 18'a, peut agir sur le palpeur d'un contact électrique 20' logé dans un boîtier 21'. Deux câbles 23a, 23b partent du contact 20' pour transmettre les informations sous forme de signaux électriques à des moyens d'exploitation constitués notamment par un calculateur électronique 12, comme illustré sur Fig. 3.

Une paroi 24 sensiblement en forme d'ellipsoïde, d'axe géométrique longitudinal confondu avec celui du conduit 10', entoure ce conduit et en est rendue solidaire par des cloisons transversales 25. Le couvercle 17' est inséré dans un logement de la paroi 24 tandis que le boîtier 21' coiffe le couvercle 17' et est fixé, de manière démontable, à la paroi 24. Cette paroi comporte, à son extrémité éloignée de l'ajutage 2, un manchon 24a fileté intérieurement qui vient se visser sur un embout fileté extérieurement des moyens de raccordement 9.

Ceci étant, le fonctionnement d'une pompe doseuse selon l'invention, est le suivant. Ce fonctionnement est décrit avec référence à Fig. 1, mais la description s'applique immédiatement à la variante de Fig. 2.

Lors d'une phase d'aspiration dans la chambre de travail 4, une dépression est créée dans le conduit 10, ce qui provoque l'ouverture du clapet 3 et l'aspiration de liquide dans le conduit 10 et la chambre 4.

Pendant cette phase d'aspiration, la membrane 13 est soumise à une dépression et se déplace vers la droite, selon la disposition de Fig.1, en se rapprochant du fond de la cavité 15, ou en se plaquant contre ce fond, selon la valeur de la dépression. Le doigt 18 se déplace vers la droite avec la membrane 13 et entraîne le palpeur 19 du capteur optique 20 qui fournit une information sous forme de signal électrique pour une phase d'aspiration.

Lorsque le piston 5 descend et refoule le liquide, le clapet 3 se ferme tandis que le clapet de sortie 6 s'ouvre. La pression dans la chambre de travail 4 augmente, de même que dans le conduit 10, et la membrane 13 est appliquée contre le couvercle 17 en repoussant le doigt 18 vers la gauche, comme représenté sur Fig. 1. Le palpeur 19 du capteur 20 est déplacé en conséquence et un signal électrique correspondant est transmis au moyen d'analyse du fonctionnement.

Le capteur optique 20 peut fonctionner en tout ou rien. En variante, le capteur optique 20, ou un moyen de détection équivalent, pourrait fournir un signal, notamment analogique, dont l'amplitude dépendrait du déplacement du palpeur 19, et serait en particulier proportionnelle au déplacement du pointeau 18.

Le système de détection de variation de pression de la pompe, selon l'invention, connecté sous la chambre de travail 4 et au-dessus du clapet d'aspiration 2 du doseur permet de profiter des phénomènes suivants :
- phase de dépression pendant l'aspiration ;
- phase de pression pendant le refoulement.

L'invention permet d'exploiter les deux phases successives dans le cycle de fonctionnement de la pompe doseuse pour générer un mouvement mécanique de translation du doigt poussoir 18, 18'.

Ce résultat est obtenu en intercalant une membrane 13, 13' suffisamment sensible qui se déplace sous l'action de la dépression et de la pression et qui génère le mouvement de translation alterné du doigt 18, 18'. Ce mouvement est récupéré pour créer le contact électrique qui sera de nature mécanique, dans l'exemple considéré avec les contacteurs électriques 20, 20' ou qui peut être en variante de nature inductive (effet Hall).

En variante, le détecteur de la variation de pression pourrait être constitué par une jauge de contrainte disposée contre la paroi externe du conduit 10.

Le fonctionnement du système de détection est assuré même pour de faibles débits de la pompe doseuse, pour des fréquences d'environ 0.003Hz.

Le fonctionnement du système de détection est peu sensible à la nature physique des produits dosés grâce au système de membrane (viscosité/produits chargés).

Le choix des matériaux mis en oeuvre est adapté à l'application chimique et à la nature du liquide d'addition pompé par le doseur.

La plage de pression du liquide principal arrivant par l'entrée 7 et sortant par l'orifice 8 peut être de 0.05 à 6 bars.

La fréquence de fonctionnement de la pompe peut être de 0.003 Hz à 1.5 Hz.

La durée de vie peut atteindre cinq millions de cycles.

L'invention permet d'apporter des informations de diagnostic de fonctionnement des pompes en assurant les fonctions suivantes :
- visualisation des cycles de la pompe doseuse ;
- alerte lors d'un arrêt du moteur d'entraînement de la pompe ;
- détection d'une défaillance du système d'aspiration ;
- en option, détection de la fin d'un réservoir contenant le liquide d'addition pompé à travers le clapet d'aspiration.

Grâce au couplage à un calculateur électronique 12, les signaux fournis par le détecteur peuvent être interprétés sous formes diverses et peuvent permettre d'accéder à un certain nombre d'informations :
- calcul de dosage en temps réel ;
- temps d'utilisation du doseur ;
- consommation du produit chimique aspiré à travers le clapet d'aspiration ;
- nombre de pannes éventuelles, ou autres informations sur le fonctionnement.

Le dispositif D détecteur de la variation de pression peut équiper une pompe neuve d'origine, ou être aisément mis en place sur une pompe déjà en service.

## Revendications

1. Pompe doseuse de liquide comportant un ajutage d'aspiration muni d'un clapet d'aspiration communiquant avec une chambre de travail dans laquelle un piston peut être déplacé selon un mouvement alternatif, une aspiration étant produite, avec ouverture du clapet d'aspiration, lorsque le piston s'éloigne de l'ajutage, et un refoulement, avec fermeture du clapet d'aspiration et sortie de liquide au travers d'un clapet de sortie, étant produit lorsque le piston se rapproche de l'ajutage,
**caractérisée en ce qu'**elle comporte entre le clapet d'aspiration (3) et la chambre de travail (4) un dispositif détecteur (D) de la variation de pression comprenant d'une part un conduit (10,10') raccordé à une extrémité à la chambre de travail (4) et muni à son autre extrémité du clapet d'aspiration (3), et d'autre part un moyen (11) sensible à la pression dans le conduit, monté dans la paroi du conduit,
et **en ce que** le moyen (11) sensible à la pression dans le conduit est raccordé à des moyens d'exploitation des variations de pression comprenant des moyens de calcul électronique (12) programmés pour déterminer différents paramètres de fonctionnement, tels que : calcul de dosage en temps réel, temps d'utilisation du doseur, consommation de produit chimique, nombre de pannes.

2. Pompe selon la revendication 1, **caractérisée en ce que** le moyen (11) sensible à la pression dans le conduit comprend une membrane (13,13') installée sur une portion de paroi du conduit (10,10') et soumise à la pression provenant de la chambre de travail (4), et un moyen de détection (18,19,20;18'20') des déplacements de la membrane par suite des variations de pression.

3. Pompe selon la revendication 2, **caractérisée en ce que** la membrane (13,13') est disposée dans une cavité en retrait de la surface interne du conduit (10,10'), la cavité communiquant par un orifice transversal (16) avec le conduit.

4. Pompe selon la revendication 2 ou 3, **caractérisée en ce que** le moyen de détection des déplacements de la membrane est un moyen mécanique, en particulier constitué par un palpeur (19), d'un capteur optique (20), actionné par un doigt (18) lié à la membrane.

5. Pompe selon la revendication 2 ou 3, **caractérisée en ce que** le moyen de détection des déplacements de la membrane comprend un capteur de déplacement de nature inductive, en particulier à effet Hall.

6. Pompe selon l'une quelconque des revendications précédentes, **caractérisée en ce que** le dispositif détecteur (D) comprend un transducteur (20,20') pour fournir des signaux électriques représentatifs des variations de pression dans la chambre de travail.

7. Pompe selon l'une quelconque des revendications précédentes, **caractérisée en ce que** le dispositif détecteur (D) de la variation de pression est raccordé de manière démontable à la chambre de travail (4).

8. Dispositif détecteur de la variation de pression pour une pompe comportant une chambre de travail dans laquelle un piston peut être déplacé selon un mouvement alternatif, selon l'une quelconque des revendications précédentes, **caractérisé en ce qu'**il comprend d'une part un conduit (10,10') propre à être raccordé de manière démontable à une extrémité de la chambre de travail (4) de pompe, et muni à son autre extrémité d'un clapet d'aspiration (3), et d'autre part un moyen (11) sensible à la pression dans le conduit, monté dans la paroi du conduit (10,10'), et **en ce que** le moyen (11) sensible à la pression dans le conduit est raccordé à des moyens d'exploitation des variations de pression comprenant des moyens de calcul électronique (12) programmés pour déterminer différents paramètres de fonctionnement, tels que : calcul de dosage en temps réel, temps d'utilisation du doseur, consommation de produit chimique , nombre de pannes.

## Patentansprüche

1. Flüssigkeitsdosierpumpe mit einem Saugstutzen, welcher mit einem Saugventil versehen ist, das mit einer Arbeitskammer verbunden ist, in welcher ein Kolben in einer Hin- und Herbewegung verschiebbar ist, wobei ein Ansaugen mit Öffnen des Saugventils bewirkt wird, wenn sich der Kolben von dem Stutzen entfernt, und ein Fördern mit Schließen des Saugventils und Auslass von Flüssigkeit durch ein Auslassventil hindurch bewirkt wird, wenn sich der Kolben dem Stutzen nähert,
**dadurch gekennzeichnet, dass** sie zwischen dem Saugventil (3) und der Arbeitskammer (4) eine Druckänderungsdetektorvorrichtung (D) aufweist, die einerseits eine Leitung (10, 10'), die an einem Ende mit der Arbeitskammer (4) und an ihrem anderen Ende mit dem Saugventil (3) verbunden ist, und andererseits eine für den Druck in der Leitung empfindliche Einrichtung (11) aufweist, welche in der Wand der Leitung angebracht ist,
und dass die für den Druck in der Leitung empfindliche Einrichtung (11) mit Einrichtungen zur Auswertung der Druckänderungen verbunden ist, welche elektronische Recheneinrichtungen (12) aufweisen, die zum Bestimmen verschiedener Betriebsparameter programmiert sind, wie: Berechnen der Dosierung in Echtzeit, Benutzungszeit des Dosierers, Verbrauch des chemischen Produkts, Anzahl der Störungen.

2. Pumpe nach Anspruch 1, **dadurch gekennzeichnet, dass** die für den Druck in der Leitung empfindliche Einrichtung (11) eine Membran (13, 13') aufweist, welche an einem Bereich der Leitungswand (10, 10') angebracht ist und mit Druck aus der Arbeitskammer (4) beaufschlagt ist, und eine Einrichtung (18, 19, 20; 18', 20') zum Erkennen von Bewegungen der Membran infolge von Druckänderungen aufweist.

3. Pumpe nach Anspruch 2, **dadurch gekennzeichnet, dass** die Membran (13, 13') in einer Ausnehmung in der Innenfläche der Leitung (10, 10') angeordnet ist, wobei die Ausnehmung über eine querverlaufende Öffnung (16) mit der Leitung verbunden ist.

4. Pumpe nach Anspruch 2 oder 3, **dadurch gekennzeichnet, dass** die Einrichtung zum Erkennen von Bewegungen der Membran eine mechanische Einrichtung ist, die insbesondere durch einen Taster (19) eines optischen Sensors (20) gebildet ist, welcher durch einen mit der Membran verbundenen Finger (18) betätigt ist.

5. Pumpe nach Anspruch 2 oder 3, **dadurch gekennzeichnet, dass** die Einrichtung zum Erkennen von Bewegungen der Membran einen induktiven Bewegungssensor, insbesondere einen Hallsensor aufweist.

6. Pumpe nach einem der vorhergehenden Ansprüche, **dadurch gekennzeichnet, dass** die Detektorvorrichtung (D) einen Wandler (20, 20') aufweist, um elektrische Signale zu liefern, welche die Druckänderungen in der Arbeitskammer wiedergeben.

7. Pumpe nach einem der vorhergehenden Ansprüche, **dadurch gekennzeichnet, dass** die Druckänderungsdetektorvorrichtung (D) lösbar mit der Arbeitskammer (4) verbunden ist.

8. Druckänderungsdetektorvorrichtung für eine Pumpe mit einer Arbeitskammer, in welcher ein Kolben in einer Hin- und Herbewegung verschiebbar ist, nach einem der vorhergehenden Ansprüche, **dadurch gekennzeichnet, dass** sie einerseits eine Leitung (10, 10'), die zum lösbaren Verbinden mit einem Ende der Arbeitskammer (4) der Pumpe geeignet ist und an ihrem anderen Ende mit einem Saugventil (3) verbunden ist, und andererseits eine für den Druck in der Leitung empfindliche Einrichtung (11) aufweist, welche in der Wand der Leitung (10, 10') angebracht ist, und dass die für den Druck in der Leitung empfindliche Einrichtung (11) mit Einrichtungen zur Auswertung der Druckänderungen verbunden ist, welche elektronische Recheneinrichtungen (12) aufweisen, die zum Bestimmen verschiedener Betriebsparameter programmiert sind, wie: Berechnen der Dosierung in Echtzeit, Benutzungszeit des Dosierers, Verbrauch des chemischen Produkts, Anzahl der Störungen.

## Claims

1. A liquid metering pump comprising a suction nuzzle fitted with an intake valve communicating with a working chamber in which a piston can be moved in a reciprocating movement, a suction being produced, with opening of the intake valve, when the piston moves away from the nozzle, and a delivery being produced, with closure of the intake valve and outlet of liquid through an outlet valve, when the piston moves closer to the nozzle,
**characterized in that** it comprises, between the intake valve (3) and the working chamber (4), a pressure-variation detection device (D) comprising, on the one hand, a duct (10, 10') connected to one end of the working chamber (4) and equipped at its other end with the intake valve (3) and, on the other hand, a means (11) sensitive to the pressure in the duct and mounted in the wall of the duct
and **in that** the means (11) sensitive to the pressure in the duct is connected to means of exploiting the pressure variations, which comprises electronic computation means (12) which are programmed to determine various operating parameters, such as: to calculate dosage in real time, the time for which the metering device has been in use, the consumption of chemical produce, the number of breakdowns.

2. The pump as claimed in claim 1, **characterized in that** the means (11) sensitive to the pressure in the duct comprises a membrane (13, 13') installed on a portion of the wall of the duct (10, 10') and subjected to the pressure emanating from the working chamber (4), and a detection means (18, 19, 20; 18', 20') detecting movements of the membrane resulting from variations in pressure.

3. The pump as claimed in claim 2, **characterized in that** the membrane (13, 13') is arranged in a cavity set back from the internal surface of the duct (10, 10'), the cavity communicating with the duct via a transverse orifice (16).

4. The pump as claimed in claim 2 or 3, **characterized in that** the means of detecting movements of the membrane is a mechanical means, particularly consisting of a feeler (19), an optical sensor (20), actuated by a finger (18) connected to the membrane.

5. The pump as claimed in claim 2 or 3, **characterized in that** the means of detecting movements of the membrane comprises a displacement sensor of inductive type, particularly a Hall-effect sensor.

6. The pump as claimed in any one of the preceding claims, **characterized in that** the detection device (D) comprises a transducer (20, 20') for supplying electrical signals indicative of the variations in pressure in the working chamber.

7. The pump as claimed in any one of the preceding claims, **characterized in that** the pressure-variation detection device (D) is connected dissociably to the working chamber (4).

8. A pressure-variation detection device for a pump as claimed in any one of the preceding claims, **characterized in that** it comprises, on the one hand, a duct (10, 10') that can be connected dissociably to one end of a working chamber (4) of the pump and can be fitted at its other end with an intake valve (3) and, on the other hand, a means (11) sensitive to the pressure in the duct and mounted in the wall of the duct (10, 10') and **in that** the means (11) sensitive to the pressure in the duct is connected to means of exploiting the pressure variations, which comprises electronic computation means (12) which are programmed to determine various operating parameters, such as: to calculate dosage in real time, the time for which the mitering device has been in use, the consumption of chemical product, the number of breakdowns.
